# EUROPÄISCHE PATENTSCHRIFT

(11) **EP 1 915 639 B1**
(45) Veröffentlichungstag und Bekanntmachung des Hinweises auf die Patenterteilung: **28.10.2015**
(21) Anmeldenummer: 06778019.7
(22) Anmeldetag: 27.07.2006
(51) Int. Cl.: G01S 13/36, F01D 21/00, G01B 15/02, G01B 11/06, G01N 22/02

(54) **VERFAHREN ZUM ERMITTELN DER SCHICHTDICKE EINER TBC-BESCHICHTUNG WENIGSTENS EINER SCHAUFEL VON EINER STRÖMUNGSMASCHINE, ENTSPRECHENDE TBC-SCHICHTDICKENMESSVORRICHTUNG ZUR DURCHFÜHRUNG DER VERFAHREN SOWIE VERWENDUNG DES VERFAHRENS UND DER TBC-SCHICHTDICKENMESSVORRICHTUNG**
METHOD FOR DETERMINING THE LAYER THICKNESS OF A TBC COATING OF AT LEAST ONE BLADE OF A NON-POSITIVE-DISPLACEMENT MACHINE, A CORRESPONDING TBC LAYER THICKNESS MEASURING DEVICE FOR CARRYING OUT THE METHOD AND USE OF THE METHOD AND THE TBC LAYER THICKNESS MEASURING DEVICE
PROCEDE DE DETERMINATION DE L'EPAISSEUR DE COUCHE D'UN REVETEMENT TBC D'AU MOINS UNE AUBE D'UNE TURBOMACHINE, DISPOSITIF CORRESPONDANT DE MESURE DE L'EPAISSEUR DE COUCHES TBC PERMETTANT LA MISE EN OEUVRE DUDIT PROCEDE ET UTILISATION DE CE PROCEDE ET DE CE DISPOSITIF DE MESURE

(30) Priorität: 17.08.2005 DE 102005038890
(43) Veröffentlichungstag der Anmeldung: 30.04.2008
(73) Patentinhaber: Siemens Aktiengesellschaft, 80333 München (DE)
(72) Erfinder: BOSSELMANN, Thomas, 91080 Marloffstein (DE); HUBER, Klaus, 91090 Effeltrich (DE); SCHICHT, Andreas, 91058 Erlangen (DE); WILLSCH, Michael, 07745 Jena (DE)
(86) Internationale Anmeldenummer: PCT/EP2006/064727
(87) Internationale Veröffentlichungsnummer: WO 2007/020170

(56) Entgegenhaltungen:
- EP-A- 1 494 020
- WO-A2-01/73472
- WO-A2-2004/065918
- US-A- 4 346 383
- US-A1- 2004 226 351

## Beschreibung

Verfahren zum Ermitteln der Schichtdicke einer TBC-Beschichtung wenigstens einer Schaufel von einer Strömungsmaschine, entsprechende TBC-Schichtdickenmessvorrichtung zur Durchführung der Verfahren sowie Verwendung des Verfahrens und der TBC-Schichtdickenmessvorrichtung

Die Erfindung betrifft ein Verfahren zum Ermitteln der Schichtdicke einer TBC-Beschichtung wenigstens einer Laufschaufel von einer Strömungsmaschine. Die Erfindung betrifft weiter ein Verfahren zum Ermitteln der Schichtdicke einer TBC-Beschichtung wenigstens einer Leitschaufel von einer Strömungsmaschine. Ferner betrifft die Erfindung eine entsprechende TBC-Schichtdickenmessvorrichtung zur Durchführung der Verfahren sowie eine Verwendung des Verfahrens und der TBC-Schichtdickenmessvorrichtung.

Strömungsmaschinen, wie beispielsweise Dampf- oder Gasturbinen, werden als Wärme-Kraft-Maschinen in der Technik eingesetzt, um eine in einem Gasstrom gespeicherte Energie in eine mechanische Energie, insbesondere in eine Drehbewegung, zu überführen.

Um gerade bei Gasturbinen einen möglichst großen Gesamtwirkungsgrad hinsichtlich der Energieausnutzung zu erreichen, werden die Gaseintrittstemperaturen von der Brennkammer in den Strömungskanal der Gasturbine möglichst hoch gewählt. Beim Stand der Technik liegen solche Gaseintrittstemperaturen beispielsweise bei 1200°C.

Damit die in dem Strömungskanal der Turbine angeordneten Schaufeln der thermischen Beanspruchung standhalten, werden sie mit einer Oberflächenbeschichtung, einer so genannten TBC-Beschichtung ("Thermal-Barrier-Coating"-Beschichtung), versehen. Eine derartige Beschichtung der Schaufeln unterliegt jedoch einer Alterung, indem diese mit der Zeit von der Schaufel in Abhängigkeit der Betriebsdauer abgetragen wird, so dass die Schichtdicke stetig abnimmt. Bei fehlender TBC-Beschichtung unterliegt die Schaufel einer sehr hohen thermischen Belastung, die zur Zerstörung der Schaufel führt. Eine Leistungsverminderung oder letzten Endes eine Beschädigung der Turbine kann die Folge sein.

In der WO 2004/065918 A2 ist ein Verfahren zum Ermitteln der Güte eine TBC-Beschichtung von Schaufeln einer Strömungsmaschine, sowie eine Vorrichtung zur Durchführung des Verfahrens angegeben. Hierbei werden elektromagnetische Wellen im Bereich der Schaufeln ausgesendet und der von den Schaufeln reflektierte Anteil der elektromagnetischen Wellen wieder empfangen und ausgewertet. Bei der Auswertung wird die Intensität der empfangenen elektromagnetischen Wellen bestimmt, aus welcher dann die Oberflächengüte der Schaufeln ermittelt wird. Mittels dieses Verfahrens lässt sich die Existenz einer Beschichtung gut nachweisen. Eine genaue Information über die Schichtdicke zu bekommen, ist insbesondere bei Zimmertemperatur kaum möglich, da die Amplitudendämpfung der elektromagnetischen Welle im Systemrauschen nahezu untergeht.

Aus der WO 01/73472 ist eine Vorrichtung und Verfahren zur Ermittlung der Dicke einer Eis/Wasser-Schicht bekannt. Die Vorrichtung ist zur Anwendung in Tragflächen und Straßen gedacht, wobei sie direkt in die Oberfläche integriert wird, auf der die Eis-/Wasserschicht entsteht. Mikrowellen werden aus der Oberfläche heraus in die Schicht emittiert und ein Phasenvergleich zwischen emittierten und an der oberen Grenzfläche rückreflektierten Mikrowellen durchgeführt.

Aus der EP 1 494 020 A1 ist ein Verfahren zur Detektion von Defekten in TBC-Schichten bekannt. Dabei wird von den Turbinenschaufeln emittierte thermische Strahlung aufgenommen und analysiert.

Der Erfindung liegt nun die Aufgabe zu Grunde, ein Verfahren, eine TBC-Schichtdickenmessvorrichtung zur Durchführung des Verfahrens, eine Verwendung des Verfahrens und eine Verwendung der TBC-Schichtdickenmessvorrichtung anzugeben, mit welchen die Schichtdicke einer TBC-Beschichtung von Schaufeln einer Strömungsmaschine insbesondere auch während des Betriebs möglichst genau bestimmt werden kann.

Zur Lösung der Aufgabe wird ein Verfahren entsprechend den Merkmalen des unabhängigen Patentanspruchs 1 angegeben.

Bei dem erfindungsgemäßen Verfahren handelt es sich um ein Verfahren zum Ermitteln der Schichtdicke einer TBC-Beschichtung wenigstens einer Laufschaufel von einer Strömungsmaschine, wobei
- mindestens eine elektromagnetische Welle auf die Oberfläche der wenigstens einen Laufschaufel ausgesendet wird,
- die mindestens eine elektromagnetische Welle von der wenigstens einen Laufschaufel zumindest teilweise reflektiert wird,
   und
- der reflektierte Anteil der mindestens einen elektromagnetischen Welle empfangen und weiterverarbeitet wird,

Das Verfahren ist dabei dadurch gekennzeichnet, dass
- die mindestens eine elektromagnetische Welle mit einer an die Schichtdicke der TBC-Beschichtung angepassten Frequenz ausgesendet wird,
- die Phase der mindestens einen ausgesandten elektromagnetischen Welle mit der Phase der mindestens einen empfangenen elektromagnetischen Wellen verglichen wird, wobei die mindestens eine ausgesandte elektromagnetische Welle bei der Reflektion eine Phasenänderung erfährt, und
- mittels des Phasenvergleichs die Schichtdicke der TBC-Beschichtung ermittelt wird.

Weiter wird mit der Erfindung ein Verfahren zum Ermitteln der Schichtdicke einer TBC-Beschichtung wenigstens einer Leitschaufel von einer Strömungsmaschine, wobei
- mindestens eine elektromagnetische Welle auf die Oberfläche der wenigstens einen Leitschaufel ausgesendet wird,
- die mindestens eine elektromagnetische Welle von der wenigstens einen Leitschaufel zumindest teilweise reflektiert wird,
   und
- der reflektierte Anteil der mindestens einen elektromagnetischen Welle empfangen und weiterverarbeitet wird.

Das Verfahren ist dabei dadurch gekennzeichnet, dass
- die mindestens eine elektromagnetische Welle mit einer an die Schichtdicke der TBC-Beschichtung angepassten Frequenz ausgesendet wird,
- die Phase der mindestens einen ausgesandten elektromagnetischen Welle mit der Phase der mindestens einen empfangenen elektromagnetischen Wellen verglichen wird, wobei die mindestens eine ausgesandte elektromagnetische Welle bei der Reflektion eine Phasenänderung erfährt, und
- mittels des Phasenvergleichs die Schichtdicke der TBC-Beschichtung ermittelt wird.

Es wird dabei ausgenutzt, dass die Phasendifferenz zwischen ausgesandter Welle und reflektiertem Wellenanteil Informationen über die Schichtdicke der TBC-Beschichtung enthält, die durch Auswertung des reflektierten Wellenanteils ermittelt werden kann. Die Phasendifferenz ist dabei abhängig von der Schichtdicke der TBC-Beschichtung, und zwar beträgt sie bei nicht vorhandener TBC-Beschichtung 0° und nimmt bei zunehmender Schichtdicke stetig zu.

Vorteilhafte Ausgestaltungen des Verfahrens gemäß der Erfindung ergeben sich aus den von Anspruch 1 abhängigen Ansprüchen.

Es ist insbesondere vorteilhaft, wenn sowohl die Schichtdicke der TBC-Beschichtung der wenigstens einen Laufschaufel als auch die Schichtdicke der TBC-Beschichtung der wenigstens einen Leitschaufel ermittelt werden. Damit ist eine umfassende Überwachung der unter besonderer Belastung stehenden Komponenten der Strömungsmaschine möglich.

Vorteilhaft ist auch, wenn aus dem Wert der Phasenänderung die Schichtdicke der TBC-Beschichtung der Schaufeln ermittelt wird. Hierbei wird mindestens eine elektromagnetische Welle mit einer vorgegebenen Frequenz bzw. Wellenlänge ausgesendet. Insbesondere liegt die ((2n+1)/4)-fache Wellenlänge mit n = 0, 1, 2, ... in der Größenordnung von ±50%, vorzugsweise ±20%, der Schichtdicke, damit ein besonders großer Phasengradient, d.h. Verhältnis von Phasenänderung zu Schichtdickenänderung, vorliegt. Damit ist es möglich, selbst bei niedriger Amplitudendämpfung die Schichtdicke zu bestimmen. Bei abnehmender Schichtdicke der TBC-Beschichtung ist dabei die Phasenänderung, d.h. Phasendifferenz zwischen ausgesandter Welle und reflektiertem Wellenanteil, geringer.

Weiter ist von Vorteil, wenn mindestens eine Resonanzfrequenz ermittelt wird, wobei die Phasenänderung bei der Resonanzfrequenz einem Wert von (360°·n + 180°) mit n = 0, 1, 2, ... entspricht, und aus dem Wert der mindestens einen Resonanzfrequenz die Schichtdicke der TBC-Beschichtung der Schaufeln ermittelt wird. Da einer Phasenänderung von (360°·n + 180°) jeweils eine Resonanzfrequenz zugeordnet ist und die Resonanzfrequenz schichtdickenabhängig sind, liefert eine Bestimmung mindestens einer Resonanzfrequenz über die Phasenänderung von (360°·n + 180°) die gewünschte Schichtdickeninformation. Bei der jeweiligen Resonanzfrequenz ist nämlich die zugeordnete Wellenlänge der ausgesandten elektromagnetischen Welle gerade (4/(2n+1))-mal so groß, wie die Dicke der TBC-Beschichtung.

Es ist dabei günstig, wenn das mindestens eine Mittel zum Erzeugen der mindestens einen elektromagnetischen Welle für den Empfang der reflektierten mindestens einen elektromagnetischen Welle verwendet wird. Die damit gewonnene Platzersparnis ermöglicht das Anbringen mehrerer kombinierter Sende- und Empfangsmittel an verschiedenen Stellen der Strömungsmaschine. So können beispielsweise über den Umfang der Strömungsmaschine verteilt angeordnete Mittel zum Aussenden und Empfangen elektromagnetischer Wellen verwendet werden, wobei eine Anordnung bedarfsgerecht vorgesehen sein kann.

Vorteilhaft ist, wenn als mindestens eine elektromagnetische Welle mindestens eine Millimeterwelle im Frequenzbereich von 30 GHz bis 130 GHz, insbesondere von 50 GHz bis 90 GHz, vorgesehen wird. Die Wellenlängen der elektromagnetischen Wellen mit Frequenzen aus diesem Frequenzbereich liegen somit in der typischen Größenordnung der Schichtdicke der TBC-Beschichtung, so dass eine besonders ausgeprägte Phasenänderung bei Reflektion gewährleistet ist.

Vorteilhafterweise kann die Ermittlung der Schichtdicke der TBC-Beschichtung während des Betriebs der Strömungsmaschine vorgesehen sein. Hiermit ist eine Online Schichtdickenmessung möglich, die ein zeitnahes Eingreifen bei sich abzeichnender riskanter Abnahme der TBC-Beschichtung ermöglicht. Stillstandzeiten der Strömungsmaschine, die auf vorsorgliche Prüfung der TBC-Beschichtung oder auch auf Reparaturmaßnahmen an beschädigten Schaufeln zurückzuführen sind, können so vermieden werden

Zur Lösung der Aufgabe wird eine TBC-Schichtdickenmessvorrichtung entsprechend den Merkmalen des Patentanspruchs 7 angegeben.

Demgemäß soll die TBC-Schichtdickenmessvorrichtung zur Durchführung der erfindungsgemäßen Verfahren vorgeschlagen mit
- mindestens einem Mittel zum Erzeugen einer elektrischen Schwingung,
- mindestens einem Mittel zur Erzeugung elektromagnetischer Wellen aus der Schwingung,
- mindestens einem Mittel zum Empfang elektromagnetischer Wellen
   und
- einer Auswerteeinheit zur Auswertung der empfangbaren elektromagnetischen Wellen
   dahingehend ausgestaltet sein, dass
- die Auswerteeinheit Mittel zum Vergleich der Phase der mindestens einen ausgesandten elektromagnetischen Welle mit der Phase der mindestens einen empfangenen elektromagnetischen Wellen umfässt.

Bei der erfindungsgemäßen TBC-Schichtdickenmessvorrichtung ergeben sich die vorstehend für das erfindungsgemäße Verfahren erläuterten Vorteile.

Vorteilhafte Ausgestaltungen der TBC-Schichtdickenmessvorrichtung gemäß der Erfindung ergeben sich aus den von Anspruch 7 abhängigen Ansprüchen.

Vorteilhaft sind das mindestens eine Mittel zur Erzeugung der mindestens einen elektromagnetischen Wellen und das mindestens eine Mittel zum Empfang der reflektierten mindestens einen elektromagnetischen Welle in einem Strömungskanal der Strömungsmaschine angeordnet. Diese können jeweils durch Antennen gebildet sein, die geeignet sind, elektromagnetische Millimeterwellen zu erzeugen und auszusenden bzw. zu empfangen. Das mindestens eine Mittel zum Erzeugen einer elektrischen Schwingung kann beispielsweise durch einen elektronischen Oszillator gebildet sein, der mit der Antenne zur Erzeugung der mindestens einen elektromagnetischen Welle in Wirkverbindung steht. Das Mittel zum Empfang elektromagnetischer Wellen steht vorzugsweise mit einer Auswerteeinheit in Wirkverbindung, die in der Lage ist, aus den vom Mittel zum Empfang gelieferten Signalen die Schichtdicke der TBC-Beschichtung der Schaufeln zu ermitteln. Darüber hinaus ist es denkbar, dass das mindestens eine Mittel zur Erzeugung der mindestens einen elektromagnetischen Welle und das mindestens eine Mittel zum Empfang der reflektierten mindestens einen elektromagnetischen Welle außerhalb des Strömungskanals der Strömungsmaschine angeordnet sind. Die erzeugte mindestens eine elektromagnetische Welle wird dann über mindestens einen entsprechend positionierten im Strömungskanal der Strömungsmaschine angeordneten Wellenleiter in den Strömungskanal ausgesendet. Die an den Schaufeln reflektierte mindestens eine elektromagnetische Welle wird ebenfalls über mindestens einen Wellenleiter an das mindestens eine Mittel zum Empfangen geleitet.

Dabei ist es vorteilhaft, dass die mindestens eine elektromagnetische Welle mit der mindestens einen Antenne gerichtet und/oder fokussierbar auszusenden ist. Hiermit ist eine gezielte Schichtdickenmessung gewährleistet. Zudem kann auch eine Ortsauflösung der Schichtdickenmessung an den Schaufeln ermöglicht werden, wenn darüber, hinaus die Antenne derart ausgeführt ist, dass Translationen und/oder Drehungen der Antenne möglich sind.

Weiterhin wird vorteilhaft vorgesehen, dass das mindestens eine Mittel zur Erzeugung elektromagnetischer Wellen sowohl zum Senden als auch zum Empfang elektromagnetischer Wellen geeignet ist. Die Anzahl der Bauelemente kann auf diese Weise weiter reduziert werden. So kann beispielsweise das mindestens eine Mittel zur Erzeugung · elektromagnetischer Wellen über ein Kopplungsmittel mit dem Mittel zum Erzeugen einer Schwingung in Wirkverbindung stehen. Die Signale, die auf die empfangenen elektromagnetischen Wellen zurückzuführen sind, werden über das Kopplungsmittel der Auswerteeinheit zugeführt. Es können auch mehrere Kopplungsmittel und Antennen vorgesehen sein, die beispielsweise parallel mit mehreren zugeordneten Auswerteeinheiten oder auch mit beispielsweise einer Auswerteeinheit im Zeitmultiplex in Verbindung stehen.

Bevorzugt kann die Strömungsmaschine eine Dampf- oder Gasturbine sein. Gerade im Großmaschinenbereich kann mit der erfindungsgemäßen TBC-Schichtdickenmessvorrichtung eine einfache, betriebssichere und genaue Schichtdickenmessung der TBC-Beschichtung der Gasturbinenschaufeln erreicht werden, wodurch ein effektiverer Betrieb gewährleistet werden kann und insbesondere teure Stillstandzeiten wegen Wartung und Reparaturmaßnahmen wegen zerstörter TBC-Beschichtungen und Schaufeln weiter reduziert werden können. So kann beispielsweise eine Erhöhung der Verfügbarkeit einer mit einer Gasturbine ausgerüsteten Energieversorgung erreicht werden. Die erfindungsgemäße Vorrichtung kann darüber hinaus derart ausgestaltet sein, dass die Auswirkungen auf die Dampf- oder Gasturbine im Strömungskanal der Strömungsmaschine weitgehend gering gehalten werden.

Mit der Erfindung wird ferner eine Verwendung des erfindungsgemäßen Verfahrens zum Ermitteln der Schichtdicke einer TBC-Beschichtung in einer Dampf- oder Gasturbine angegeben.

Mit der Erfindung wird überdies eine Verwendung der erfindungsgemäßen TBC-Schichtdickenmessvorrichtung im Strömungskanal der Strömungsmaschine, wobei das mindestens eine Mittel zur Erzeugung elektromagnetischer Wellen im Strömungskanal der Strömungsmaschine angeordnet ist.

Dabei ist es vorteilhaft, wenn eine Dampf- oder Gasturbine als Strömungsmaschine vorgesehen ist.

Bevorzugte, jedoch keinesfalls einschränkende Ausführungsbeispiele der Erfindung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine Gasturbine des Stands der Technik in einer teilweise aufgeschnittenen, perspektivischen Ansicht,
- Figur 2: eine vergrößerte Ansicht eines Ausschnitts aus der Zeichnung in Figur 1 mit einer erfindungsgemäßen Vorrichtung,
- Figur 3: ein Prinzipschaltbild zur Ausführung des erfindungsgemäßen Verfahrens,
- Figur 4: eine Laufschaufel der Gasturbine in Figur 1,
- Figur 5: eine Leitschaufel der Gasturbine in Figur 1,
- Figur 6: eine spektrale Intensitätsverteilung und einen Phasenverlauf reflektierter elektromagnetischer Wellen bei gleicher Schichtdicke der TBC-Beschichtung in Abhängigkeit der Wellenfrequenz ,
- Figur 7: drei Phasenverläufe reflektierter elektromagnetischer Wellen unterschiedlicher Wellenfrequenz in Abhängigkeit der Schichtdicke der TBC-Beschichtung,
- Figur 8: den Zusammenhang zwischen reziproker Resonanzfrequenz und Schichtdicke der TBC-Beschichtung und
- Figur 9: eine Antennen-Anordnung zur Überwachung von Leit- und/oder Laufschaufeln.

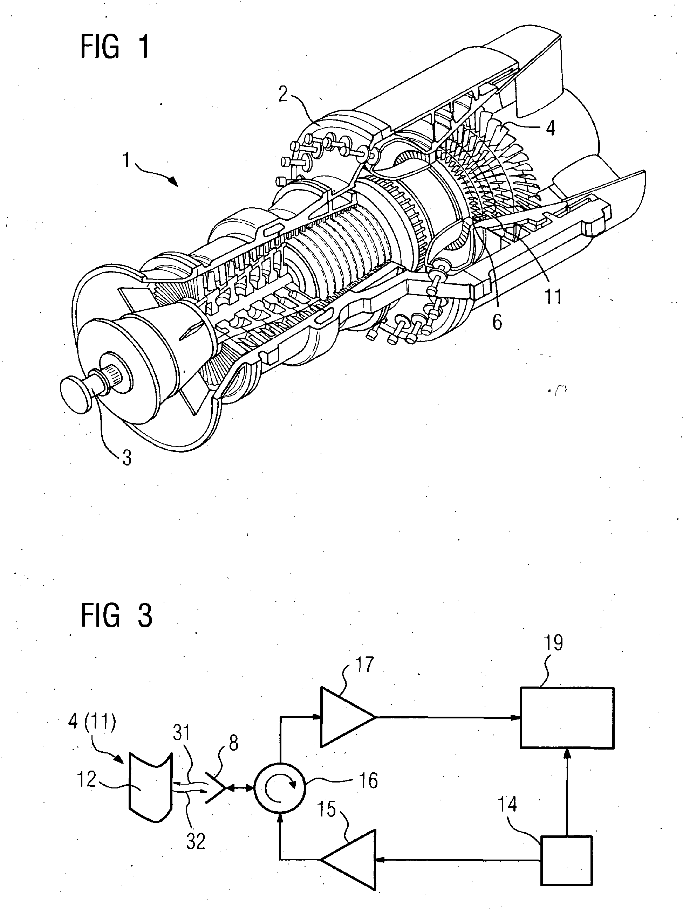

Einander entsprechende Teile sind in den Figuren 1 bis 9 mit denselben Bezugszeichen versehen.

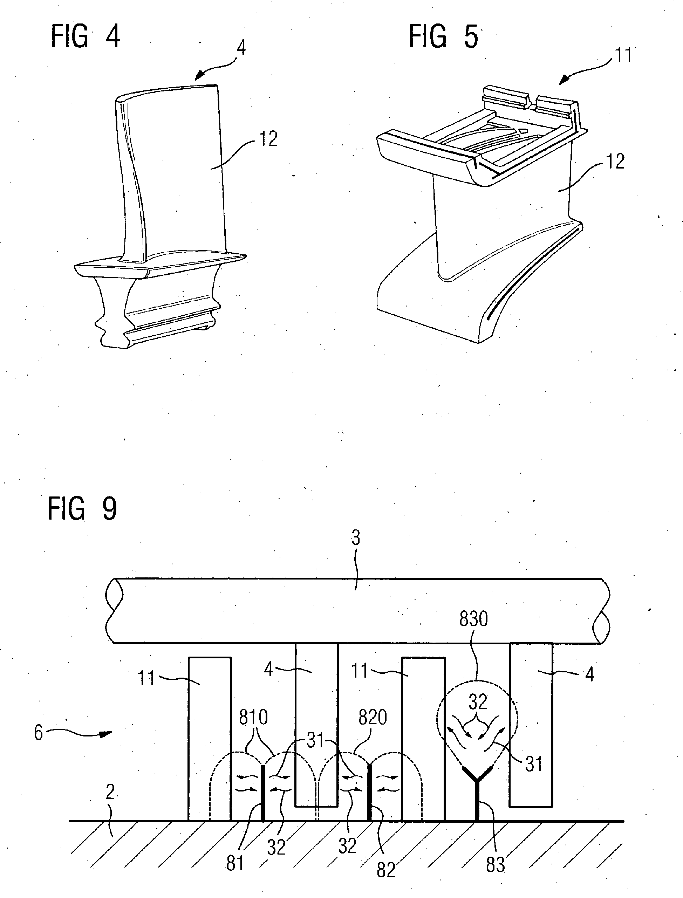

In Figur 1 ist eine Gasturbine 1 des Standes der Technik dargestellt, die für eine hohe Gaseintrittstemperatur von ca. 1200°C konzipiert ist. Die Gasturbine 1 weist an einer in einem Gehäuse 2 drehbar gelagerten Rotorwelle 3 angeordnete Laufschaufeln 4 auf. Ferner sind mit dem Gehäuse 2 drehfest verbundene Leitschaufeln 11 vorgesehen (vgl. Figur 4, Figur 5). Die Laufschaufeln 4 und die Leitschaufeln 11 sind jeweils mit einer TBC-Beschichtung 12 versehen, um den physikalischen Beanspruchungen im Strömungskanal 6 der Gasturbine 1 Stand zu halten. Bei der TBC-Beschichtung 12 (TBC: Termal-Barrier-Coating) handelt es sich beispielsweise um "Yttrium stabilisiertes Zirkoniumoxid" (so genanntes "YSZ").

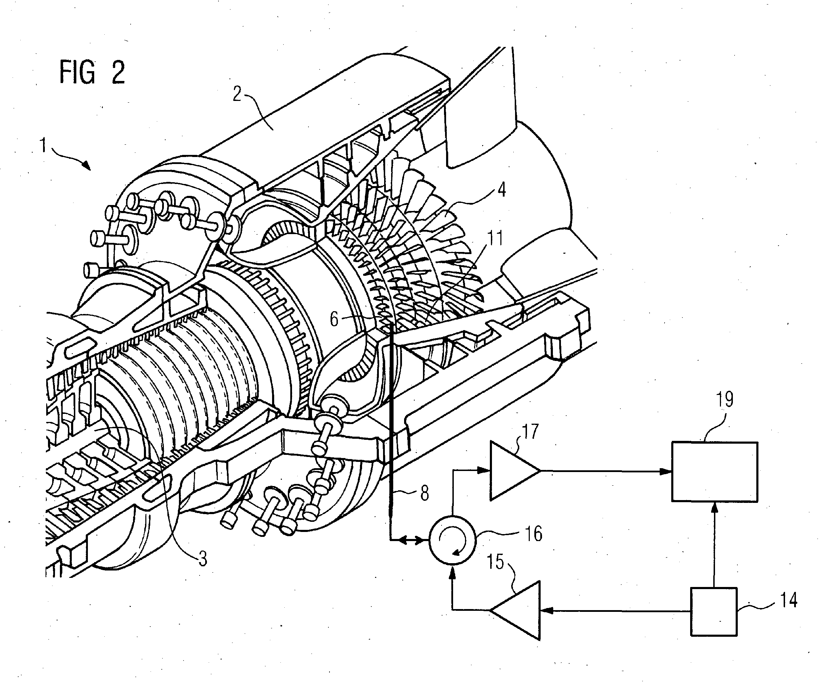

Wie in Figur 2 dargestellt, ist die Turbine 1 mit einer erfindungsgemäßen TBC-Schichtdickenmessvorrichtung ausgestattet, welche eine Antenne 8, insbesondere eine für Millimeterwellen ausgeführte Antenne, aufweist, die in den Strömungskanal 6 der Gasturbine 1 hineinragt. Die Antenne 8, die insbesondere für elektromagnetische Wellen mit Frequenzen von 30 GHz bis 130 GHz, insbesondere mit Frequenzen von 50 GHz bis 90 GHz, vorgesehen ist, ist im Bereich der zu untersuchenden Schaufeln 4, 11 insbesondere zwischen zwei Schaufelreihen angeordnet. Die Antenne 8 dient als Mittel zum Aussenden von elektromagnetischen Wellen und kann auch als Mittel zum Empfang von elektromagnetischen Wellen eingesetzt werden. Die Antenne 8 steht in Kommunikationsverbindung mit einem Zirkulator 16. Die erfindungsgemäße Vorrichtung weist ferner einen Hochfrequenzgenerator 14 auf, der über einen Verstärker 15 mit dem Zirkulator 16 in Wirkverbindung steht. Der Zirkulator 16 steht mit einem Empfangsverstärker 17 in Verbindung, der mit der Auswerteeinheit 19 gekoppelt ist. Die Auswerteeinheit 19 selbst ist wiederum mit dem Hochfrequenzgenerator 14 verbunden.

Im Einzelnen läuft das erfindungsgemäße Verfahren zum Ermitteln der Schichtdicke der TBC-Beschichtung 12 von Lauf- und Leitschaufeln 4 und 11 gemäß Figur 3 folgendermaßen ab:
Der elektronische Hochfrequenzgenerator 14 erzeugt eine Hochfrequenz mit einer festen, vorgebbaren Frequenz im Bereich zwischen 30 GHz und 130 GHz, vorzugsweise zwischen 50 GHz und 90 GHz, liegt. Die Hochfrequenz wird dem Verstärker 15 zugeführt, der seinerseits die verstärkte Hochfrequenz über den Zirkulator 16 der Antenne 8 zuführt. Die Antenne 8 erzeugt aus der zugeführten Hochfrequenzenergie mindestens eine entsprechende elektromagnetische Welle 31 und sendet diese gemäß ihrer Strahlungscharakteristik, vorzugsweise gerichtet und insbesondere fokussiert, aus. Mindestens eine entsprechende Schaufel 4, 11 reflektiert einen Anteil 32 der ausgesandten mindestens einen elektromagnetischen Welle 31 zurück zur insbesondere selben Antenne 8. Die reflektierten elektromagnetischen Wellen 32 werden über die Antenne 8 wieder in ein elektrisches Signal gewandelt, welches dem Zirkulator 16 zugeführt wird. Der Zirkulator 16 trennt nun das empfangene Signal vom gesendeten Signal und führt dies dem Empfangsverstärker 17 zu. Vom Empfangsverstärker 17 gelangt das Signal zur Auswerteeinheit 19.

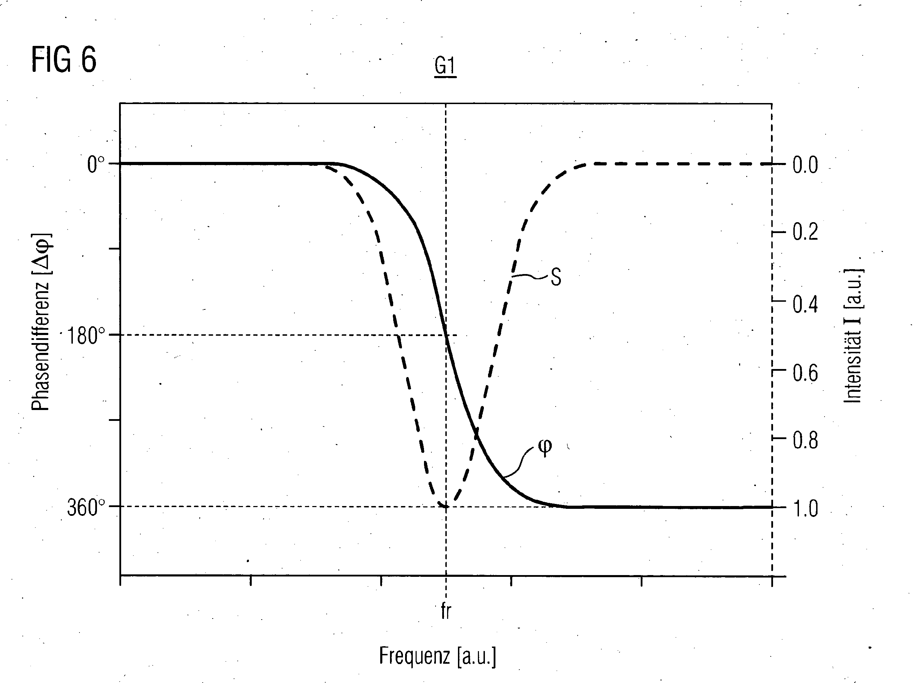

In Figur 6 sind in einem Graphen G1 eine frequenzabhängige spektrale Intensitätsverteilung S und ein entsprechender frequenzabhängiger Phasenverlauf ϕ einer reflektierten elektromagnetischen Welle 32 bei konstanter Schichtdicke der TBC-Beschichtung 12 angegeben. Die gestrichelte Ordinate gibt die Intensität I der reflektierten elektromagnetischen Welle 32 an, während die durchgezogene Ordinate die Phasendifferenz Δϕ zwischen ausgesandter Welle 31 und reflektiertem Wellenanteil 32 zeigt. Auf der Abszisse ist die Frequenz aufgetragen. Die abgebildete Intensitätsverteilung weist ein Minimum bei einer bestimmten Frequenz fr, der so genannten Resonanzfrequenz auf. Bei dieser Resonanzfrequenz fr entspricht 1/4 der Wellenlänge der elektromagnetischen Welle 31, 32 in der TBC-Beschichtung 12 gerade der Schichtdicke der TBC-Beschichtung 12. Hierbei löschen sich die an der Oberfläche der TBC-Beschichtung 12 und die an der Grenzfläche von TBC-Beschichtung 12 und dahinter liegendem Metall reflektierten Anteile der ausgesandten elektromagnetischen Welle 31 gegenseitig zumindest teilweise aus. Der Phasenverlauf ϕ zeigt eine Phasendifferenz Δϕ von 0° bei niedrigen Frequenzen, die zu höheren Frequenzen hin stetig zunimmt. Bei der in Figur 6 abgebildeten Resonanzfrequenz fr weist der Phasenverlauf ϕ den höchsten Gradienten auf, wobei der Wert der Phasendifferenz Δϕ 180° entspricht.

Neben der in Figur 6 angegebenen Resonanzfrequenz fr, gibt es noch weitere nicht dargestellte Resonanzfrequenzen frₙ mit n = 0, 1, 2, ..., wobei fr = fr₀.ist. So gilt, dass bei jeder Resonanzfrequenz frₙ das ((2n+1)/4)-fache der Wellenlänge der, elektromagnetischen Welle 31, 32 in der Oberflächenbeschichtung gerade der Schichtdicke der TBC-Beschichtung 12 entspricht. Die Phasendifferenz Δϕ bei der jeweiligen Resonanzfrequenz frₙ ist dann entsprechend mit Δϕ = (360°·n + 180°) gegeben.

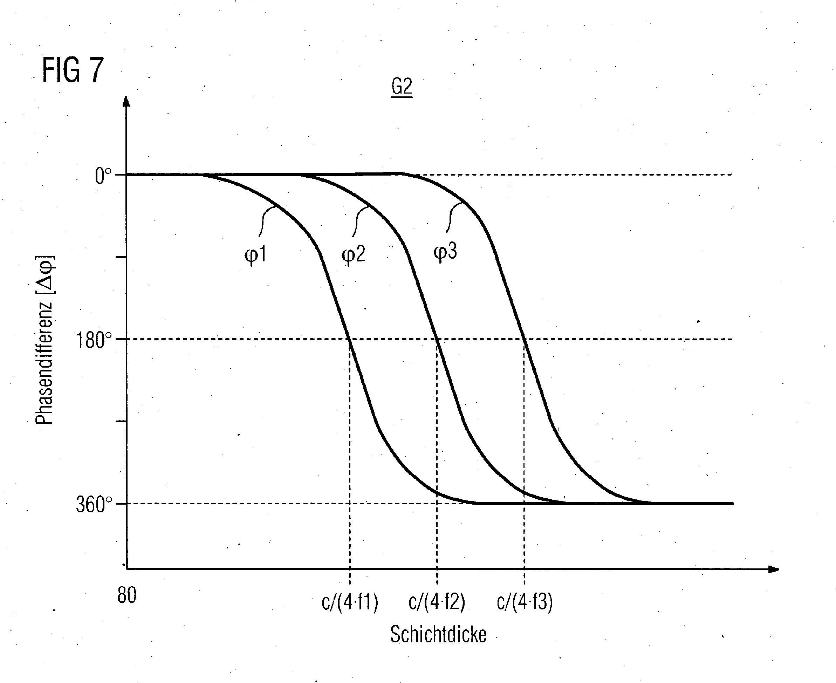

In Figur 7 sind in einem weiteren Graphen G2 beispielhaft drei Phasenverläufe ϕ1, ϕ2 und ϕ3 von reflektierten elektromagnetischen Wellen 32 unterschiedlicher Frequenz f1 (90 GHz), f2 (70 GHz) bzw. f3 (50 GHz) angegeben, wobei die Ordinate die Phasendifferenz Δϕ zwischen ausgesandter Welle 31 und reflektiertem Wellenteil 32 angibt und auf der Abszisse die Schichtdicke der TBC-Beschichtung 12 aufgetragen ist. Bei fehlender TBC-Beschichtung 12 genauso wie bei geringen Schichtdicken der TBC-Beschichtung 12 beträgt die Phasendifferenz Δϕ für alle drei Frequenzen f1, f2, f3 0°. Nimmt die Schichtdicke zu, vergrößert sich die Phasendifferenz Δϕ bis hin zu einem Betrag von 360° im abgebildeten Graphen G2; dabei ist der größte Gradient in allen Phasenverläufen ϕ1, ϕ2, ϕ3 bei einer Phasendifferenz Δϕ von 180° zu finden. Hier tritt der oben beschriebene Resonanzfall ein, und zwar als Beispiel für n = 0. Bei einer Phasendifferenz Δϕ von 180° entspricht die Schichtdicke der Oberflächenbeschichtung 12 gerade 1/4 der Wellenlänge der elektromagnetischen Welle 31, 32 in der TBC-Beschichtung 12. Die Frequenzen f1, f2, f3 der elektromagnetischen Wellen 32 kommen dann Resonanzfrequenzen für die entsprechende Schichtdicke gleich. Die jeweilige Schichtdicke beträgt somit c/(4·fi) mit i = 1,2,3, wobei c die Ausbreitungsgeschwindigkeit der elektromagnetischen Welle 31, 32 in der TBC-Beschichtung 12 ist.

Mittels der Auswerteeinheit 19 wird zunächst die Phasendifferenz Δϕ zwischen ausgesandter und reflektierter elektromagnetischer Welle 31, 32 ermittelt. Dann wird die Phasendifferenz Δϕ mit einer zuvor erfassten Eichkurve verglichen, die einen Phasenverlauf beispielsweise gemäß Graph G2 aus Figur 7 wiedergibt, und hieraus die Schichtdicke der TBC-Beschichtung 12 bestimmt.

In Figur 7 ist weiter zu erkennen, dass für kleinere Frequenzen die Phasenverläufe ϕ1, ϕ2 und ϕ3 und damit auch die Resonanzfrequenzen zu größeren Schichtdicken hin verschoben sind.

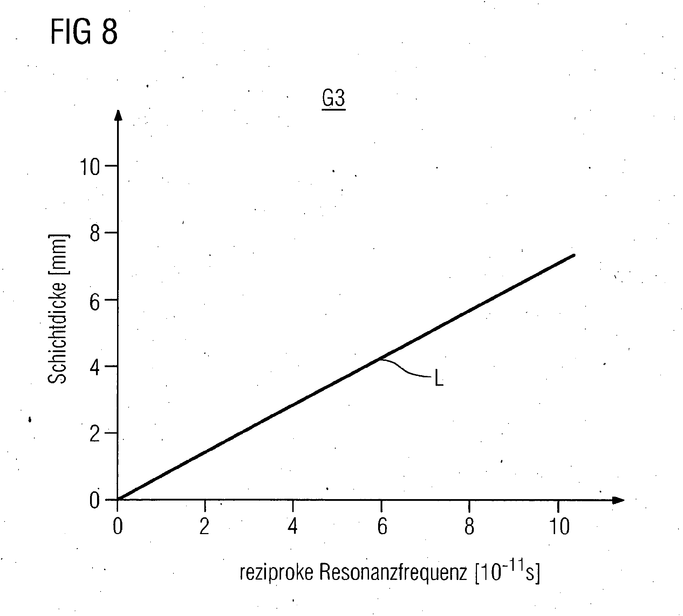

In Figur 8 ist in einem dritten Graphen G3 der Zusammenhang zwischen Resonanzfrequenz frₙ bzw. reziproker Resonanzfrequenz frₙ⁻¹ und Schichtdicke verdeutlicht. Die Ordinate gibt die Schichtdicke an, während auf der Abszisse die reziproke Resonanzfrequenz frₙ⁻¹ aufgetragen ist. Es ist zu sehen, dass der Zusammenhang zwischen Schichtdicke und reziproker Resonanzfrequenz frₙ⁻¹ durch eine Gerade L bestimmt ist. Je kleiner die Resonanzfrequenz frₙ bzw. je größer die reziproke Resonanzfrequenz frₙ⁻¹ ist, desto größer ist die Schichtdicke der TBC-Beschichtung 12.

Es ist somit auch realisierbar, dass elektromagnetische Wellen 31 mit einem breiten Frequenzband, das im Bereich zwischen 30 GHz und 130 GHz, vorzugsweise zwischen 50 GHz und 90GHz, liegen kann, von der Antenne 8 ausgesendet und nach der Reflektion an der mindestens einen Schaufel 4, 11 insbesondere von der Antenne 8 wieder empfangen werden. Gewandelt in ein elektrisches Signal werden diese dann über den Zirkulator 16 und Empfangsverstärker 17 der Auswerteeinheit 19 zugeführt. Mittels der Auswerteeinheit 19 werden die Phasendifferenzen Δϕ zwischen den ausgesandten und reflektierten elektromagnetischen Wellen 31,32 ermittelt und diejenigen Frequenzen frₙ mit einer Phasendifferenz von Δϕ = (360°·n + 180°), insbesondere mit n = 0, identifiziert. Danach wird der reziproke Wert dieser Frequenzen frₙ mit einer zuvor erfassten Eichgerade verglichen, die die Relation zwischen Schichtdicke und reziproker Resonanzfrequenz frₙ⁻¹ gemäß Graph 3 aus Figur 8 wiedergibt, und hieraus die Schichtdicke der TBC-Beschichtung 12 bestimmt. Der Phasendifferenz von Δϕ = 180° ist die "erste" Resonanzfrequenz fr₀ zugeordnet. Es ist aber auch denkbar, Resonanzfrequenzen frₙ höherer Ordnung mit n > 0, die bei größeren Phasendifferenzen Δϕ = (360°·n + 180°) liegen, zu identifizieren und entsprechend auszuwerten.

Die ermittelte Schichtdicke der TBC-Beschichtung 12 wird über nicht näher dargestellte Anzeige- bzw. Meldeeinheiten an eine überwachende Stelle gemeldet bzw. an eine Zentrale weitergeleitet. Die Auswerteeinheit kann auch mit einer Vergleichsfunktion ausgestattet sein, mit der das Unterschreiten eines vorgebbaren Schichtdickenschwellwertes feststellbar ist. So kann beispielsweise bei Unterschreiten des Schwellwertes eine Meldung automatisch ausgegeben werden, um eine geeignete Schutzmaßnahme, wie beispielsweise das Abschalten der Turbine 1 einzuleiten.

In Figur 9 sind beispielhafte Ausführungsformen und Anordnungen verschiedener Antennen 81, 82 und 83 mit jeweils zugehöriger Strahlungscharakteristik 810, 820 bzw. 830 dargestellt. Die Antennen 81, 82 und 83 sind im Strömungskanal 6 im Bereich der zu untersuchenden Laufschaufeln 4 und/oder Leitschaufeln 11 zwischen den Schaufelreihen angeordnet. Geeignet ist eine Ausführung als Stab-Antenne oder als Koaxial-Antenne, insbesondere als koaxial ausgeführte Dipolantenne. Andere Antennen-Formen, wie beispielsweise Hornantennen, sind jedoch ebenfalls denkbar. Die Strahlungscharakteristik kann symmetrisch, wie bei den Antennen 81 und 83, oder aber asymmetrisch, wie bei der Antenne 82, ausgebildet sein. Neben Antennen mit breiter Abstrahlcharakteristik können auch Antennen verwendet werden, die die elektromagnetischen Wellen 31 gerichtet und darüber hinaus auch fokussierend abstrahlen können. Hierzu kommen insbesondere die genannten Hornantennen in Frage.

Die vorliegende Erfindung ist nicht auf das Ausführungsbeispiel beschränkt anzusehen. Ebenso in den Schutzbereich hineingehörend ist, dass auch mehrere Antennen 8 zum Aussenden und/oder für den Empfang vorgesehen sind, um beispielsweise eine Redundanz der Messung oder auch eine höhere Genauigkeit zu erreichen.

Darüber hinaus sieht die vorliegende Erfindung die Möglichkeit einer gleichzeitigen Schichtdickenmessung der TBC-Beschichtung 12 genannter Schaufeln 4, 11 vor.

## Patentansprüche

1. Verfahren zum Ermitteln der Schichtdicke einer TBC-Beschichtung (12) wenigstens einer Laufschaufel (4) und/oder Leitschaufel (11) von einer Strömungsmaschine (1), wobei
- mindestens eine elektromagnetische Welle (31) auf die Oberfläche der wenigstens einen Laufschaufel (4) bzw. Leitschaufel (11) ausgesendet wird,
- die mindestens eine elektromagnetische Welle (31) von der wenigstens einen Laufschaufel (4) bzw. Leitschaufel (11) zumindest teilweise reflektiert wird, und
- der reflektierte Anteil (32) der mindestens einen elektromagnetischen Welle (31) empfangen und weiterverarbeitet wird,
**dadurch gekennzeichnet, dass**
- die mindestens eine elektromagnetische Welle (31) mit einer an die Schichtdicke der TBC-Beschichtung (12) angepassten Frequenz ausgesendet wird,
- die Phase der mindestens einen ausgesandten elektromagnetischen Welle (31) mit der Phase der mindestens einen empfangenen elektromagnetischen Wellen (32) verglichen wird, wobei die mindestens eine ausgesandte elektromagnetische Welle (31) bei der Reflektion eine Phasenänderung erfährt, und
- mittels des Phasenvergleichs die Schichtdicke der TBC-Beschichtung (12) ermittelt wird.

2. Verfahren nach Anspruch 1, **dadurch gekennzeichnet, dass** aus dem Wert der Phasenänderung die Schichtdicke der TBC-Beschichtung (12) der Schaufel (4, 11) ermittelt wird.

3. Verfahren nach Anspruch 1 oder 2, **dadurch gekennzeichnet, dass** die mindestens eine elektromagnetische Welle (31, 32) innerhalb der TBC-Beschichtung (12) eine Wellenlänge in der Größenordnung von ±50%, insbesondere ±20%, der (4/(2n+1))-fachen Schichtdicke der TBC-Beschichtung (12) mit n = 0, 1, 2, ... aufweist.

4. Verfahren nach Anspruch 1, **dadurch gekennzeichnet, dass** mindestens eine Resonanzfrequenz ermittelt wird, wobei die Phasenänderung bei der Resonanzfrequenz einem Wert von (360°·n + 180°) mit n = 0, 1, 2, ... entspricht, und aus dem Wert der mindestens einen Resonanzfrequenz die Schichtdicke der TBC-Beschichtung (12) der Schaufeln (4, 11) ermittelt wird.

5. Verfahren nach einem der vorangehenden Ansprüche, **dadurch gekennzeichnet, dass** als mindestens eine elektromagnetische Welle (31) mindestens eine Millimeterwelle im Frequenzbereich von 30 GHz bis 130 GHz, insbesondere von 50 GHz bis 90 GHz, vorgesehen wird.

6. Verfahren nach einem der vorangehenden Ansprüche, **gekennzeichnet durch** die Ermittlung der Schichtdicke der TBC-Beschichtung (12) während des Betriebs der Strömungsmaschine (1).

7. TBC-Schichtdickenmessvorrichtung zur Durchführung des Verfahrens nach einem der vorhergehenden Ansprüche mit
- mindestens einem Mittel (14) zum Erzeugen einer elektrischen Schwingung,
- mindestens einem Mittel (8, 81, 82, 83) zur Erzeugung elektromagnetischer Wellen (31) aus der Schwingung,
- mindestens einem Mittel (8, 81, 82, 83) zum Empfang elektromagnetischer Wellen (32) und
- einer Auswerteeinheit (19) zur Auswertung der empfangbaren elektromagnetischen Wellen (32),
**dadurch gekennzeichnet, dass** die Auswerteeinheit (19) Mittel zum Vergleich der Phase der mindestens einen ausgesandten elektromagnetischen Welle (31) mit der Phase der mindestens einen empfangenen elektromagnetischen Wellen (32) umfasst.

8. TBC-Schichtdickenmessvorrichtung nach Anspruch 7, **dadurch gekennzeichnet, dass** das mindestens eine Mittel (8, 81, 82, 83) zur Erzeugung elektromagnetischer Wellen (31) mindestens eine für Millimeterwellen vorgesehene Antenne ist.

9. TBC-Schichtdickenmessvorrichtung nach Anspruch 7 oder 8, **dadurch gekennzeichnet, dass** die mindestens eine elektromagnetische Welle (31) mit der mindestens einen Antenne (8, 81, 82, 83) gerichtet auszusenden ist.

10. TBC-Schichtdickenmessvorrichtung nach einem der Ansprüche 7 bis 9, **dadurch gekennzeichnet, dass** die mindestens eine elektromagnetische Welle (31) mit der mindestens einen Antenne (8, 81, 82, 83) fokussierbar auszusenden ist.

11. TBC-Schichtdickenmessvorrichtung nach einem der Ansprüche 7 bis 10, **dadurch gekennzeichnet, dass** das mindestens eine Mittel (8, 81, 82, 83) zur Erzeugung elektromagnetischer Wellen (31) sowohl zum Senden als auch zum Empfang elektromagnetischer Wellen (31, 32) geeignet ist.

12. Verwendung des Verfahrens nach einem der Ansprüche 1 bis 6 zum Ermitteln der Schichtdicke einer TBC-Beschichtung (12) in einer Dampf- oder Gasturbine (1).

13. Verwendung der TBC-Schichtdickenmessvorrichtung nach einem der Ansprüche 7 bis 11 im Strömungskanal (6) der Strömungsmaschine (1), wobei das mindestens eine Mittel (8, 81, 82, 83) zur Erzeugung elektromagnetischer Wellen (31) im Strömungskanal (6) der Strömungsmaschine (1) angeordnet ist.

14. Verwendung der TBC-Schichtdickenmessvorrichtung nach Anspruch 13, **gekennzeichnet durch** eine Dampf- oder Gasturbine als Strömungsmaschine (1).

## Claims

1. Method for determination of the layer thickness of a TBC coating (12) on at least one rotor blade (4) and/or stator blade (11) of a continuous flow machine (1), wherein
- at least one electromagnetic wave (31) is transmitted at the surface of the at least one rotor blade (4) or stator blade (11),
- the at least one electromagnetic wave (31) is at least partially reflected from the at least one rotor blade (4) or stator blade (11), and
- the reflected component (32) of the at least one electromagnetic wave (31) is received and processed further,
**characterized in that**
- the at least one electromagnetic wave (31) is transmitted at a frequency which is matched to the layer thickness of the TBC coating (12),
- the phase of the at least one transmitted electromagnetic wave (31) is compared with the phase of the at least one received electromagnetic wave (32), with the at least one transmitted electromagnetic wave (31) having its phase changed on reflection, and
- the layer thickness of the TBC coating (12) is determined by means of the phase comparison.

2. Method according to Claim 1, **characterized in that** the layer thickness of the TBC coating (12) on the blade (4, 11) is determined from the value of the phase change.

3. Method according to Claim 1 or 2, **characterized in that** the at least one electromagnetic wave (31, 32) has a wavelength within the TBC coating (12) in the order of magnitude of ± 50%, in particular ± 20%, of (4/(2n+1))-times the layer thickness of the TBC coating (12), where n = 0, 1, 2, ....

4. Method according to Claim 1, **characterized in that** at least one resonant frequency is determined, with the phase change at the resonant frequency, corresponding to a value of (360°·n + 180°) where n = 0, 1, 2, ..., and with the layer thickness of the TBC coating (12) on the blades (4, 11) being determined from the value of the at least one resonant frequency.

5. Method according to one of the preceding claims, **characterized in that** at least one millimetric wave in the frequency range from 30 GHz to 130 GHz, in particular from 50 GHz to 90 GHz, being provided as at least one electromagnetic wave (31).

6. Method according to one of the preceding claims, **characterized by** the layer thickness of the TBC coating (12) being determined during operation of the continuous flow machine (1).

7. TBC layer thickness measurement apparatus for carrying out the method according to one of the preceding claims, having
- at least one means (14) for production of an electrical oscillation,
- at least one means (8, 81, 82, 83) for production of electromagnetic waves (31) from the oscillation,
- at least one means (8, 81, 82, 83) for reception of electromagnetic waves (32) and
- an evaluation unit (19) for evaluation of the electromagnetic waves (32) which can be received,
**characterized in that** the evaluation unit (19) has means for comparison of the phase of the at least one transmitted electromagnetic wave (31) with the phase of the at least one received electromagnetic wave (32).

8. TBC layer thickness measurement apparatus according to Claim 7, **characterized in that** the at least one means (8, 81, 82, 83) for production of electromagnetic waves (31) is at least one antenna which is intended for millimetric waves.

9. TBC layer thickness measurement apparatus according to Claim 7 or 8, **characterized in that** the at least one electromagnetic wave (31) can be transmitted directionally by the at least one antenna (8, 81, 82, 83).

10. TBC layer thickness measurement apparatus according to one of Claims 7 to 9, **characterized in that** the at least one electromagnetic wave (31) can be transmitted such that it can be focused by the at least one antenna (8, 81, 82, 83).

11. TBC layer thickness measurement apparatus according to one of Claims 7 to 10, **characterized in that** the at least one means (8, 81, 82, 83) for production of electromagnetic waves (31) is suitable both for transmission and for reception of electromagnetic waves (31, 32).

12. Use of the method according to one of Claims 1 to 6 for determination of the layer thickness of a TBC coating (12) in a steam or gas turbine (1).

13. Use of the TBC layer thickness measurement apparatus according to one of Claims 7 to 11 in the flow channel (6) of the continuous flow machine (1), with the at least one means (8, 81, 82, 83) for production of electromagnetic waves (31) being arranged in the flow channel (6) of the continuous flow machine (1).

14. Use of the TBC layer thickness measurement apparatus according to Claim 13, **characterized by** a steam or gas turbine as the continuous flow machine (1).

## Revendications

1. Procédé de détermination de l'épaisseur de couche d'un revêtement (12) TBC d'au moins une aube (4) mobile et/ou d'au moins une aube (11) directrice d'une turbomachine (1), dans lequel
- on envoie une onde (31) électromagnétique sur la surface de la au moins une aube (4) mobile ou de la au moins une aube (11) directrice,
- on réfléchit au moins en partie la au moins une onde (31) électromagnétique de la au moins une aube (4) mobile ou de la au moins une aube (11) directrice et
- on reçoit et on traite ultérieurement la partie (32) réfléchie de la au moins une onde (31) électromagnétique,
**caractérisé en ce que**
- on envoie la au moins une onde (31) électromagnétique à une fréquence adaptée à l'épaisseur de couche du revêtement TBC,
- on compare la phase de la au moins une onde (31) électromagnétique envoyée à la phase de la au moins une onde (32) électromagnétique reçue, la au moins une onde (31) électromagnétique envoyée subissant un déphasage à la réflexion et
- on détermine l'épaisseur de couche du revêtement (12) TBC au moyen de la comparaison des phases.

2. Procédé suivant la revendication 1,
**caractérisé en ce que** l'on détermine l'épaisseur de couche du revêtement (12) TBC de l'aube (4, 11) à partir de la valeur du déphasage.

3. Procédé suivant la revendication 1 ou 2,
**caractérisé en ce que** la au moins une onde (31, 32) électromagnétique a, au sein du revêtement (12) TBC, une longueur d'onde de l'ordre de grandeur de ± 50 %, notamment de ± 20 %, de (4/(2n+)) fois l'épaisseur de couche du revêtement (12) TBC avec n = 0, 1, 2, ...

4. Procédé suivant la revendication 1,
**caractérisé en ce qu'**on détermine au moins une fréquence de résonance, le déphasage correspondant, à la fréquence de résonance, à une valeur de (360°.n + 180°) avec n = 0, 1, 2,... et on détermine l'épaisseur de couche du revêtement (12) TBC des aubes (4, 11) à partir de la valeur de la au moins une fréquence de résonance.

5. Procédé suivant l'une des revendications précédentes,
**caractérisé en ce qu'**on prévoit, comme au moins une onde (31) électromagnétique, au moins une onde millimétrique dans la plage de fréquence de 30 GHz à 130 GHz, notamment de 50 GHz à 90 GHz.

6. Procédé suivant l'une des revendications précédentes,
**caractérisé par** la détermination de l'épaisseur de couche du revêtement (12) TBC pendant le fonctionnement de la turbomachine (1).

7. Dispositif de mesure de l'épaisseur de couche TBC pour effectuer le procédé suivant l'une des revendications précédentes, comprenant
- au moins un moyen (14) de production d'une oscillation électrique,
- au moins un moyen (8, 81, 82, 83) de production d'ondes (31) électromagnétiques à partir de l'oscillation,
- au moins un moyen (8, 81, 82, 83) de réception d'ondes (32) électromagnétiques et
- une unité (19) d'exploitation pour l'exploitation des ondes (32) électromagnétiques pouvant être reçues,
**caractérisé en ce que** l'unité (19) d'exploitation comprend des moyens de comparaison de la phase de la au moins une onde (31) électromagnétique envoyée à la phase de la au moins une onde (32) électromagnétique reçue.

8. Dispositif de mesure de l'épaisseur de couche TBC suivant la revendication 7,
**caractérisé en ce que** le au moins le moyen (8, 81, 82, 83) de production d'onde (31) électromagnétiques est au moins une antenne prévue pour des ondes millimétriques.

9. Dispositif de mesure de l'épaisseur de couche TBC suivant la revendication 7 ou 8,
**caractérisé en ce que** la au moins une onde (31) électromagnétique est envoyée de manière dirigée par la au moins une antenne (8, 81, 82, 83).

10. Dispositif de mesure de l'épaisseur de couche TBC suivant l'une des revendications 7 à 9,
**caractérisé en ce que** la au moins une onde (31) électromagnétique est émise avec possibilité de focalisation par la au moins une antenne (8, 81, 82, 83).

11. Dispositif de mesure de l'épaisseur de couche TBC suivant l'une des revendications 7 à 10,
**caractérisé en ce que** le au moins un moyen (8, 81, 82, 83) de production d'ondes (31) électromagnétiques est propre à la fois à émettre et à recevoir des ondes (31, 32) électromagnétiques.

12. Utilisation du procédé suivant l'une des revendications 1 à 6 pour la détermination de l'épaisseur de couche d'un revêtement (12) TBC dans une turbine (1) à vapeur ou à gaz.

13. Utilisation du dispositif de mesure de l'épaisseur de couche TBC suivant l'une des revendications 7 à 11 dans le canal (6) d'écoulement de la turbomachine (1), le au moins un moyen (8, 81, 82, 83) de production d'ondes (31) électromagnétiques étant disposé dans le canal (6) d'écoulement de la turbomachine (1).

14. Utilisation du dispositif de mesure de l'épaisseur de couche TBC suivant la revendication 13,
**caractérisée par** une turbine à vapeur ou une turbine à gaz comme turbomachine (1).
